# EUROPEAN PATENT APPLICATION

(11) **EP 4 765 323 A1**
(43) Date of publication of application: **24.06.2026**
(21) Application number: 25224434.8
(22) Date of filing: 17.12.2025
(51) Int. Cl.: H01M 10/48, H01M 50/618, H01M 50/636, H01M 50/673

(54) **METHOD FOR CONTROLLING AN ELECTROLYTE FILLING UNIT**

(30) Priority: 20.12.2024 SE 2451346
(71) Applicant: NORDEN MACHINERY AB, 391 28 Kalmar (SE)
(72) Inventor: SÖDERSTRÖM, Hans, 392 42 Kalmar (SE); NILSSON, Jan, 392 57 Kalmar (SE); FRIDOLFSSON, Per, 393 51 Kalmar (SE)
(74) Representative: Zacco Sweden AB

(57) **Abstract**

An electrolyte filling unit and method for controlling the filling of electrolyte in a battery cell structure comprising a battery casing and an electrode assembly arranged within the battery casing. The electrolyte filling unit comprises a pressure chamber, a filling arrangement arranged in the pressure chamber, and a pressure storage tank for holding a volume of electrolyte. The filling arrangement is fluidly connected to the pressure storage tank via a dosing arrangement. A tank pressure level in the pressure storage tank relative to the pressure level in the pressure chamber is controlled, such that the tank pressure level constantly is higher than the pressure level in the pressure chamber during filling of electrolyte from the pressure storage tank via the dosing arrangement and the filling arrangement into the battery casing.

## Description

### TECHNICAL FIELD

The present disclosure relates to a method for controlling an electrolyte filling unit arranged for filling electrolyte in a battery cell structure, where the battery cell structure comprises a battery casing and an electrode assembly arranged within the battery casing. A filling arrangement of the electrolyte filling unit is dispensing electrolyte into the battery cell structure. The disclosure further relates to an electrolyte filling unit comprising a filling arrangement, which is used for filling electrolyte in a battery cell structure.

### BACKGROUND

Battery cell structures are used in many different applications, such as in electric vehicle applications or in other applications where there is a need for power from battery cell structures. The battery cell structures commonly comprise an electrode assembly arranged in a battery casing together with electrolyte. The battery casing is often formed as a closed and sealed structure that is enclosing the electrode assembly and electrolyte, and the electrode assembly may be arranged as a sandwich-like structure of different layers. The layers may for example include current collector metal foils, electrodes, and separators. The electrolyte is serving as conductive medium for ion transfer between the electrodes of the electrode assembly, and commonly liquid electrolytes are used.

The filling of liquid electrolyte into the battery cell structures is a complicated and time-consuming part of the manufacturing process when producing the battery cell structures, since the electrolyte needs to be thoroughly soaked into the different layers of the electrode assemblies. Often, repeated electrolyte filling operations are needed, where the electrolyte is allowed to soak into the electrode assembly during pre-determined time intervals, in order to achieve battery cell structures with high quality. Inadequate filling of electrolyte may lead to battery cell structures with reduced performance.

With today's increasing demands for efficient production of battery cell structures, there is a need for more efficient and simple control of the manufacturing processes.

### SUMMARY

An object of the present disclosure is to provide a method for controlling an electrolyte filling unit and an electrolyte filling unit where the previously mentioned problems are avoided. This object is at least partly achieved by the features of the independent claims. The dependent claims contain further developments of the method for controlling an electrolyte filling unit and the electrolyte filling unit.

The disclosure concerns a method for controlling an electrolyte filling unit arranged for filling electrolyte in a battery cell structure comprising a battery casing and an electrode assembly arranged within the battery casing. The electrolyte filling unit comprises a pressure chamber, a filling arrangement arranged in the pressure chamber, and a pressure storage tank for holding a volume of electrolyte. The filling arrangement is fluidly connected to the pressure storage tank via a dosing arrangement. The method comprises the steps: applying a negative pressure in the pressure chamber for establishing a negative pressure level around and inside the battery cell structure when arranged in the pressure chamber; filling electrolyte from the pressure storage tank via the dosing arrangement and the filling arrangement into the battery casing, when the negative pressure level is established; applying a positive pressure in the pressure chamber by increasing the pressure from the negative pressure level to a positive pressure level upon filling electrolyte from the pressure storage tank via the dosing arrangement and the filling arrangement into the battery casing; continuing the filling of electrolyte from the pressure storage tank via the dosing arrangement and the filling arrangement into the battery casing, until a final filling volume of electrolyte is dispensed into the battery casing via the filling arrangement; controlling a tank pressure level in the pressure storage tank relative to the pressure level in the pressure chamber, such that the tank pressure level constantly is higher than the pressure level in the pressure chamber during filling of electrolyte from the pressure storage tank via the dosing arrangement and the filling arrangement into the battery casing.

Advantages with the method are that the electrolyte filling operation is efficiently controlled, and a fast electrolyte filling operation is enabled for dispensing the final filling volume. The final filling volume is a volume of electrolyte needed for a complete filling of electrolyte into the battery cell structure. The final filling volume is thus the complete electrolyte volume needed for the electrolyte filling operation. The pressure storage tank is holding a volume of electrolyte to be used in the electrolyte filling unit, and the pressure storage tank is connected to the filling arrangement with suitable hoses or conduits. The pressure storage tank is arranged outside the pressure chamber via the dosing arrangement. By controlling the tank pressure level in the pressure storage tank constantly higher than the pressure level in the pressure chamber, the pressure difference across the dosing arrangement can be controlled for avoiding too high pressure difference values that may damage the dosing arrangement.

In one embodiment, the method further comprises the steps: establishing a pre-determined pressure difference across the dosing arrangement during filling of electrolyte from the pressure storage tank via the dosing arrangement and the filling arrangement into the battery casing arranged in the pressure chamber. The pressure difference has a pressure difference value determined as the difference between the tank pressure level in the pressure storage tank and the pressure level in the pressure chamber. With this method step, there is always a pre-determined pressure difference across the dosing arrangement when filling electrolyte, such that the tank pressure level in the pressure storage tank constantly is higher than the pressure level in the pressure chamber. If suitable, the pressure difference value may vary during the electrolyte filling operation.

In one embodiment, the pressure difference value is lower than a pre-determined maximum pressure difference value during filling of electrolyte from the pressure storage tank via the dosing arrangement and the filling arrangement into the battery casing. The tank pressure level in the pressure storage tank is controlled to be higher than the pressure level in the pressure chamber and lower than the sum of the pressure level in the pressure chamber and the maximum pressure difference value. In this way, the pressure difference across the dosing arrangement will never be higher than the maximum pressure difference value during the electrolyte filling operation. Certain dosing arrangements may for example be designed to withstand a specific maximum pressure difference, and when using the maximum pressure difference value damage to the dosing arrangement used could be prevented and the filling accuracy could be maintained.

In one embodiment, the maximum pressure difference value is in the range of 0.05-0.3 MPa, preferably in the range of 0.1-0.2 MPa, and more preferably in the range of 0.1-0.15 MPa.

In one embodiment, the pressure difference value is a constant pressure difference value during filling of electrolyte from the pressure storage tank via the dosing arrangement and the filling arrangement into the battery casing. The tank pressure level in the pressure storage tank is controlled to follow the pressure level in the pressure chamber by the constant pressure difference value. With this specific controlling of the respective pressure levels in the pressure chamber and the pressure storage tank, the pressure difference value is always the same when filling electrolyte and the constant pressure difference value may be determined based on the type of the dosing arrangement used. Certain dosing arrangements may for example be designed to withstand a specific maximum pressure difference, and when using the constant pressure difference value damage to the dosing arrangement used could efficiently be prevented and the filling accuracy could be maintained.

In one embodiment, the constant pressure difference value is in the range of 0.05-0.3 MPa, preferably in the range of 0.05-0.2 MPa, and more preferably in the range of 0.05-0.15 MPa.

The dosing arrangement could be arranged as a valve unit or a pump unit. The valve unit or the pump unit is controlling the filling of electrolyte from the pressure storage tank via the filling arrangement into the battery casing.

The valve unit may in specific embodiments be arranged as a time pressure valve unit, where the time pressure valve unit is controlling the filling of electrolyte from the pressure storage tank via the filling arrangement into the battery casing. The time pressure valve unit is used for an efficient dispensing of the electrolyte with high precision.

The filling arrangement may in some configurations comprise a filling nozzle and a filling chamber arranged in the pressure chamber. The filling orifice of the filling chamber is connected to a fill opening of the battery cell structure before filling electrolyte into the battery casing through the fill opening, and thereafter the final filling volume of electrolyte is dispensed into the filling chamber via the filling nozzle, enabling a flow of electrolyte from the filling chamber via the filling orifice into the battery casing through the fill opening. The filling nozzle is extending into the filling chamber for an efficient dispensing of a filling volume of electrolyte into the filling chamber. Suitably, the pressure chamber and the filling chamber are arranged as integrated parts, and during the electrolyte filling operation the pressure levels in the pressure chamber and the filling chamber are the same. The filling arrangement is engaging the battery cell structure during the filling operation. The filling orifice is connected to the fill opening of the battery cell structure during the electrolyte filling operation, allowing electrolyte to flow from the filling chamber into the battery casing via the filling orifice. The connection of the filling orifice to the fill opening is enabling a controlled flow of electrolyte from the filling chamber via the filling orifice into the battery casing through the fill opening.

The filling arrangement may comprise a sealing arrangement arranged in connection to the filling orifice. The fill opening and/or an area around the fill opening is engaged by the sealing arrangement for establishing a fluid tight seal between the filling arrangement and the battery cell structure before filling electrolyte into the battery casing through the fill opening. The sealing arrangement is preventing electrolyte from leaking out during the electrolyte filling operation. The sealing arrangement may in addition prevent air or other gases in the pressure chamber from being pushed into the battery casing when the positive pressure is applied. The sealing arrangement may be arranged as a gasket attached to the filling chamber, and the gasket may be made of a suitable material, such as rubber or other elastomeric materials.

In other configurations, the filling arrangement comprises a filling nozzle. The filling nozzle is arranged in connection to the fill opening and thereafter the final filling volume of electrolyte is dispensed into the battery casing through the fill opening via the filling nozzle. The filling nozzle is efficiently dispensing the electrolyte into the battery casing.

In one embodiment, the step of continuing the filling of electrolyte is performed when increasing the pressure from the negative pressure level to the positive pressure level and/or when the positive pressure level is established, upon filling electrolyte from the pressure storage tank via the dosing arrangement and the filling arrangement into the battery casing, until the final filling volume of electrolyte is dispensed into the battery casing via the filling arrangement.

In one embodiment, the method further comprises the step: applying the negative pressure level less than or equal to 0.02 MPa, preferably less than or equal to 0.001 MPa, more preferably less than or equal to 0.0005 MPa. With negative pressure is meant a pressure level below atmospheric pressure, but above absolute zero pressure. The negative pressure level values defined are referring to absolute pressure. These low pressure levels are securing that air or other gases are efficiently drawn out from the battery casing and the electrode assembly, preparing the battery cell structure for filling of electrolyte. The negative pressure level is maintained for a suitable time period for allowing trapped air or other gases in the battery cell structure to escape via the fill opening. The negative pressure level used may for example depend on the construction of the pressure chamber, the type of battery cell structure used, and the electrolyte composition.

In one embodiment, the method further comprises the step: applying the positive pressure level to at least 0.2 MPa, preferably at least 1 MPa, more preferably at least 1.6 MPa. With positive pressure is meant a pressure level above atmospheric pressure. The positive pressure level values defined are referring to absolute pressure. These high pressure levels are efficiently pushing the electrolyte into the battery casing and is further supporting the soaking of electrolyte into the electrode assembly. The positive pressure level used may for example depend on the construction of the pressure chamber and the type of battery cell structure used.

The disclosure further concerns an electrolyte filling unit arranged for filling electrolyte in a battery cell structure comprising a battery casing and an electrode assembly arranged within the battery casing. The electrolyte filling unit comprises a pressure chamber, a filling arrangement arranged in the pressure chamber, and a pressure storage tank for holding a volume of electrolyte. The filling arrangement is fluidly connected to the pressure storage tank via a dosing arrangement, and the pressure chamber is configured for applying a negative pressure level around and inside the battery cell structure when arranged in the pressure chamber. When the negative pressure level is established, the filling arrangement is configured for filling electrolyte from the pressure storage tank via the dosing arrangement into the battery casing. The pressure chamber is configured for establishing a positive pressure level around and inside the battery cell structure, by increasing the pressure from the negative pressure level to a positive pressure level. The filling arrangement is configured for continuing the filling of electrolyte from the pressure storage tank via the dosing arrangement into the battery casing, until a final filling volume of electrolyte is dispensed into the battery casing via the filling arrangement. The electrolyte filling unit is configured for controlling a tank pressure level in the pressure storage tank relative to the pressure level in the pressure chamber, such that the tank pressure level constantly is higher than the pressure level in the pressure chamber during filling of electrolyte from the pressure storage tank via the dosing arrangement and the filling arrangement into the battery casing.

Advantages with these features are that the electrolyte filling operation is efficiently controlled, and a fast electrolyte filling operation is enabled for dispensing the final filling volume. The final filling volume is a volume of electrolyte needed for a complete filling of electrolyte into the battery cell structure. The final filling volume is thus the complete electrolyte volume needed for the electrolyte filling operation. The pressure storage tank is holding a volume of electrolyte to be used in the electrolyte filling unit, and the pressure storage tank is connected to the filling arrangement with suitable hoses or conduits. The pressure storage tank is arranged outside the pressure chamber via the dosing arrangement. By controlling the tank pressure level in the pressure storage tank constantly higher than the pressure level in the pressure chamber, the pressure difference across the dosing arrangement can be controlled for avoiding too high pressure difference values that may damage the dosing arrangement.

In one embodiment, the electrolyte filling unit is configured for establishing a pre-determined pressure difference across the dosing arrangement during filling of electrolyte from the pressure storage tank via the dosing arrangement and the filling arrangement into the battery casing arranged in the pressure chamber. The pressure difference has a pressure difference value determined as the difference between the tank pressure level in the pressure storage tank and the pressure level in the pressure chamber. With this configuration, there is always a pre-determined pressure difference across the dosing arrangement when filling electrolyte, such that the tank pressure level in the pressure storage tank constantly is higher than the pressure level in the pressure chamber. If suitable, the pressure difference value may vary during the electrolyte filling operation.

In one embodiment, the pressure difference value is lower than a pre-determined maximum pressure difference value during filling of electrolyte from the pressure storage tank via the dosing arrangement and the filling arrangement into the battery casing. The tank pressure level in the pressure storage tank is controlled by the electrolyte filling unit to be higher than the pressure level in the pressure chamber and lower than the sum of the pressure level in the pressure chamber and the maximum pressure difference value. In this way, the pressure difference across the dosing arrangement will never be higher than the maximum pressure difference value during the electrolyte filling operation. Certain dosing arrangements may for example be designed to withstand a specific maximum pressure difference, and when using the maximum pressure difference value damage to the dosing arrangement used could be prevented and the filling accuracy could be maintained.

In one embodiment, the maximum pressure difference value is in the range of 0.05-0.3 MPa, preferably in the range of 0.1-0.2 MPa, and more preferably in the range of 0.1-0.15 MPa.

In one embodiment, the pressure difference value is a constant pressure difference value during filling of electrolyte from the pressure storage tank via the dosing arrangement and the filling arrangement into the battery casing. The tank pressure level in the pressure storage tank is controlled by the electrolyte filling unit to follow the pressure level in the pressure chamber by the constant pressure difference value. With this specific controlling of the respective pressure levels in the pressure chamber and the pressure storage tank, the pressure difference value is always the same when filling electrolyte and the constant pressure difference value may be determined based on the type of the dosing arrangement used. Certain dosing arrangements may for example be designed to withstand a specific maximum pressure difference, and when using the constant pressure difference value damage to the dosing arrangement used could efficiently be prevented and the filling accuracy could be maintained.

**In** one embodiment, the constant pressure difference value is in the range of 0.05-0.3 MPa, preferably in the range of 0.05-0.2 MPa, and more preferably in the range of 0.05-0.15 MPa.

The dosing arrangement may be arranged as a valve unit or a pump unit, which is configured for controlling the filling of electrolyte from the pressure storage tank via the filling arrangement into the battery casing. The valve unit may be arranged as a time pressure valve unit, and the time pressure valve unit is used for an efficient dispensing of the electrolyte with high precision.

The filling arrangement may suitably comprise a filling nozzle. The filling nozzle is configured for dispensing the final filling volume of electrolyte. The filling nozzle is used for an efficient dispensing of electrolyte during the electrolyte filling operation.

In some configurations, the filling arrangement comprises a filling chamber arranged in the pressure chamber, and the filling nozzle is extending into the filling chamber. The filling chamber comprises a filling orifice configured for being connected to a fill opening of the battery cell structure before filling electrolyte into the battery casing through the fill opening, enabling a flow of electrolyte from the filling chamber via the filling orifice into the battery casing through the fill opening. The filling nozzle is extending into the filling chamber for an efficient dispensing of a filling volume of electrolyte into the filling chamber. Suitably, the pressure chamber and the filling chamber are arranged as integrated parts, and during the electrolyte filling operation the pressure levels in the pressure chamber and the filling chamber are the same. The filling arrangement is engaging the battery cell structure during the filling operation. The filling orifice is connected to the fill opening of the battery cell structure during the electrolyte filling operation, allowing electrolyte to flow from the filling chamber into the battery casing via the filling orifice. The connection of the filling orifice to the fill opening is enabling a controlled flow of electrolyte from the filling chamber via the filling orifice into the battery casing through the fill opening.

The filling arrangement may comprise a sealing arrangement arranged in connection to the filling orifice. The sealing arrangement is configured for engaging the fill opening and/or an area around the fill opening for establishing a fluid tight seal between the filling arrangement and the battery cell structure. The sealing arrangement is preventing electrolyte from leaking out during the electrolyte filling operation. The sealing arrangement may in addition prevent air or other gases in the pressure chamber from being pushed into the battery casing when the positive pressure is applied. The sealing arrangement may be arranged as a gasket attached to the filling chamber, and the gasket may be made of a suitable material, such as rubber or other elastomeric materials.

In some configurations, the pressure chamber is applying the negative pressure level less than or equal to 0.02 MPa, preferably less than or equal to 0.001 MPa, more preferably less than or equal to 0.0005 MPa. With negative pressure is meant a pressure level below atmospheric pressure, but above absolute zero pressure. The negative pressure level values defined are referring to absolute pressure. The negative pressure level used may for example depend on the construction of the pressure chamber, the type of battery cell structure used, and the electrolyte composition.

In some configurations, the pressure chamber is applying the positive pressure level to at least 0.2 MPa, preferably at least 1 MPa, more preferably at least 1.6 MPa. With positive pressure is meant a pressure level above atmospheric pressure. The positive pressure level values defined are referring to absolute pressure. The positive pressure level used may for example depend on the construction of the pressure chamber and the type of battery cell structure used.

### BRIEF DESCRIPTION OF DRAWINGS

The disclosure will be described in detail in the following, with reference to the attached drawings, in which
- Fig. 1: show schematically, in a perspective view, an electrolyte filling unit configured for filling electrolyte in a battery cell structure,
- Fig. 2a-c: show schematically, in cross-sectional side views, a first embodiment of the electrolyte filling unit, and in a perspective view, an embodiment of the battery cell structure,
- Fig. 3a-e: show schematically, in cross-sectional side views, operational steps of the electrolyte filling unit according to the first embodiment for filling electrolyte in the battery cell structure,
- Fig. 4a-c: show schematically, in cross-sectional side views, a second embodiment of the electrolyte filling unit, and in a perspective view, an embodiment of the battery cell structure, and
- Fig. 5a-d: show schematically, in cross-sectional side views, operational steps of the electrolyte filling unit according to the second embodiment for filling electrolyte in the battery cell structure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

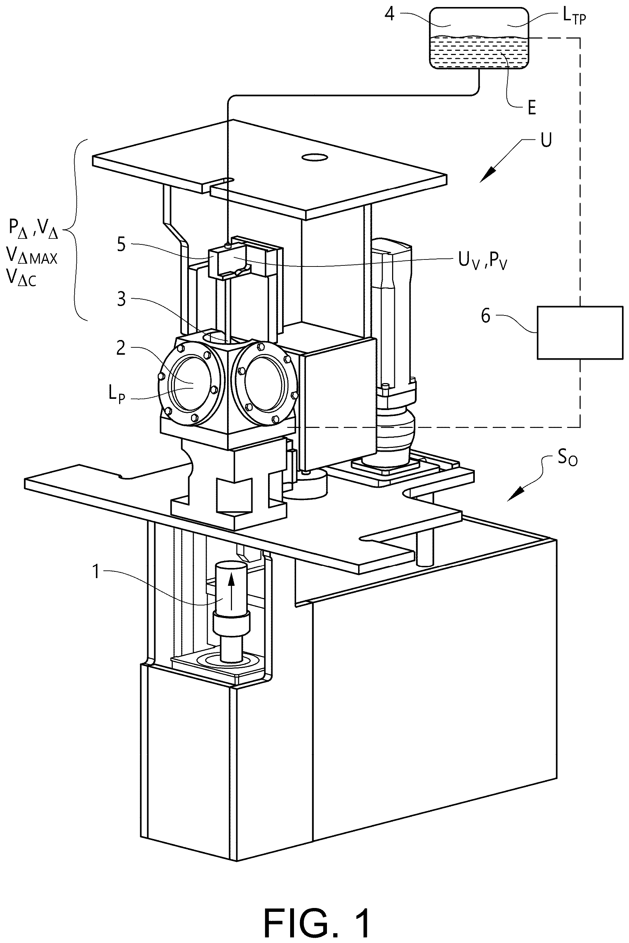

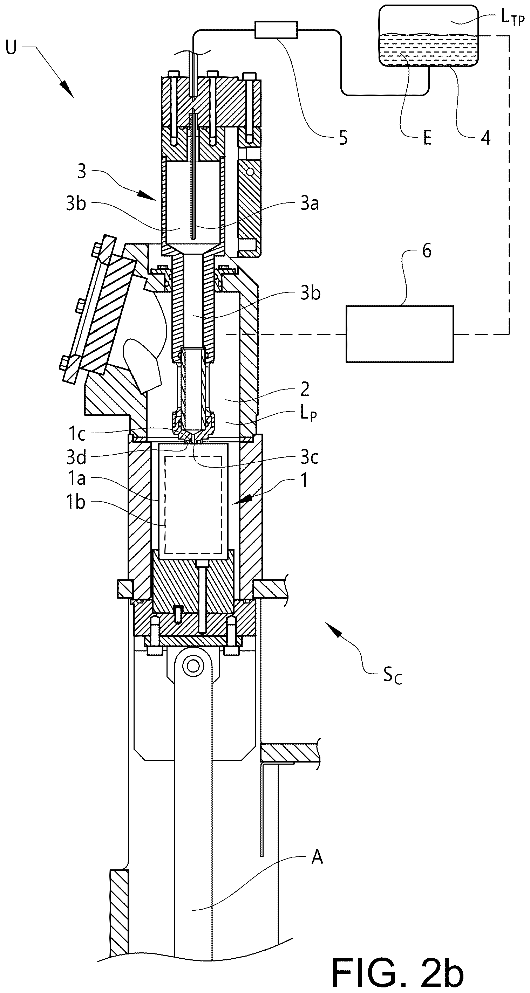

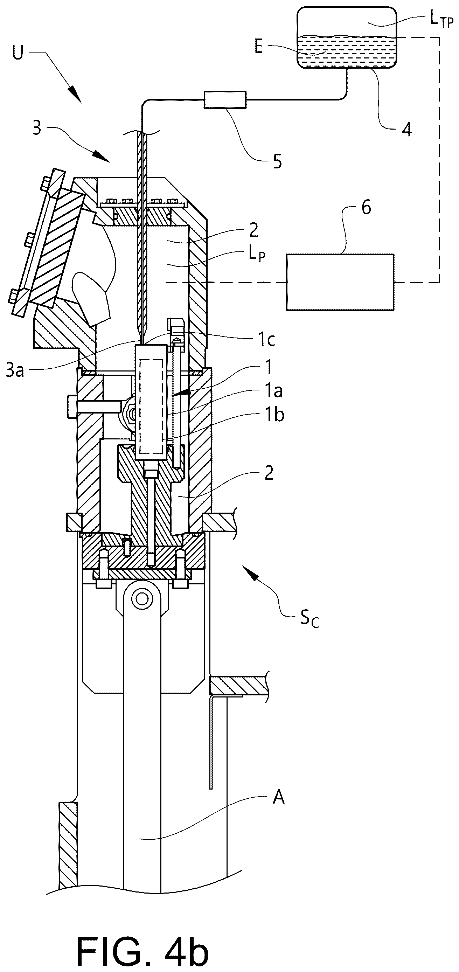

Figures 1, 2a-b, and 4a-b, schematically show embodiments of an electrolyte filling unit U, which is used for filling electrolyte E into a battery cell structure 1 during an electrolyte filling operation. In figure 1, an outer structure of a pressure chamber 2 of the electrolyte filling unit U is shown, and during the electrolyte filling operation the battery cell structure 1 will be arranged inside the pressure chamber 2, as understood from figures 2b and 4b. The pressure chamber 2 suitably comprises an opening or similar arrangement for arranging the battery cell structure 1 into the pressure chamber 2, and the battery cell structure 1 may for example be inserted into the pressure chamber 2 by an actuating mechanism or similar device that is pushing the battery cell structure 1 into the pressure chamber 2. In figures 1, 2a, and 4a, the pressure chamber 2 is arranged in an open state S_{O}, in which the battery cell structure 1 can be inserted into the pressure chamber 2 by the actuating mechanism, as indicated with the arrow. The pressure chamber 2 is thereafter arranged in a closed state S_{C}, as shown in figures 2b and 4b, with the battery cell structure 1 arranged inside the pressure chamber 2. In the closed state S_{C} of the pressure chamber 2, a sealed off and controlled pressure environment around the battery cell structure 1 is established for an efficient electrolyte filling operation.

It should be understood that the pressure chamber 2 may have other designs and configurations than the one described and illustrated. In other non-illustrated embodiments, the pressure chamber 2 could be arranged in other ways, without the actuating mechanism, or with a different type of actuating mechanism. In further non-illustrated embodiments, the electrolyte filling unit U may be arranged to fill electrolyte E into two or more battery cell structures 1, instead of only one battery cell structure 1 as exemplified in figures 1, 2a-b, and 4a-b.

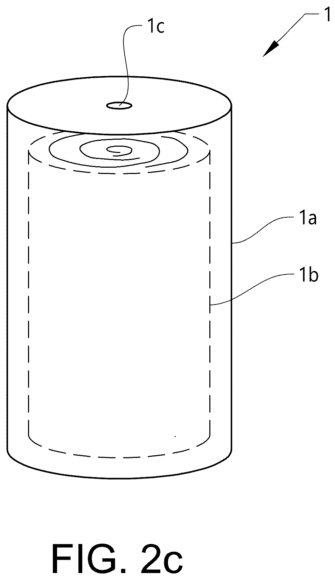

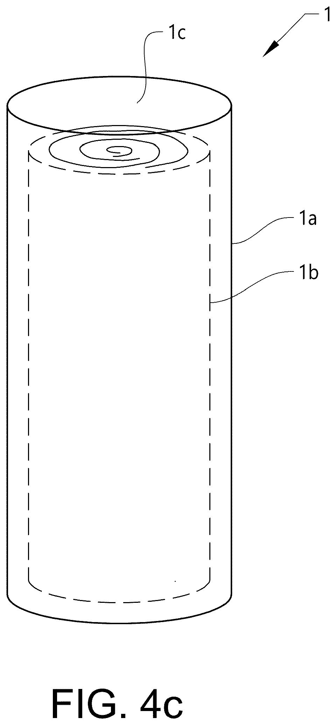

The battery cell structure 1 may be of any suitable construction and comprises a battery casing 1a and an electrode assembly 1b arranged within the battery casing 1a, as exemplified in figures 2c and 4c. The battery cell structure 1 further comprises liquid electrolyte E that is filled into the battery casing 1a during the electrolyte filling operation.

In the embodiment shown in figure 2c, the battery cell structure 1 has a cylindrical outer shape, and the battery casing 1a comprises an upper lid structure with a fill opening 1c. Electrolyte E is filled into the battery casing 1a via the fill opening 1c during the electrolyte filling operation, and after filling of electrolyte E, the fill opening 1c is sealed with suitable sealing means. The battery cell structure 1 in this embodiment may for example be a 4680 type battery designed to power electric vehicles. The 4680 type battery is named from its dimensions, 46 millimetres in diameter and 80 millimetres in height. This battery size of the 4680 type battery allows storing more energy and handling more heat compared to older battery constructions, making it ideal for high-performance applications.

In the embodiment shown in figure 4c, the battery cell structure 1 has a cylindrical outer shape, and in this embodiment, the battery casing 1a is arranged without an upper lid structure to provide a large fill opening 1c. Electrolyte E is filled into the battery casing 1a via the fill opening 1c during the electrolyte filling operation, and after filling of electrolyte E, the fill opening 1c is sealed with a suitable upper lid structure. The battery cell structure 1 in this embodiment may for example be a 2170 type battery designed to power electric vehicles. The 2170 type battery is named from its dimensions, 21 millimetres in diameter and 70 millimetres in height.

In the embodiments shown in figures 2c and 4c, the electrode assembly 1b is arranged with a jelly roll configuration, where the electrode assembly 1b is constructed as a sandwich-like structure of different layers. The layers may for example include current collector metal foils, electrodes, and separators, and the different layers are formed into a roll-like structure that is placed in the battery casing 1a, before filling electrolyte E into the battery casing 1a. The battery casing 1a may for example be made of steel, aluminium, plastics, or composite materials.

It should be understood that in other non-illustrated embodiments, the battery casing 1a may be arranged with other shapes than cylindrical, and the electrode assembly 1b may have other designs and configurations than the jelly roll configuration.

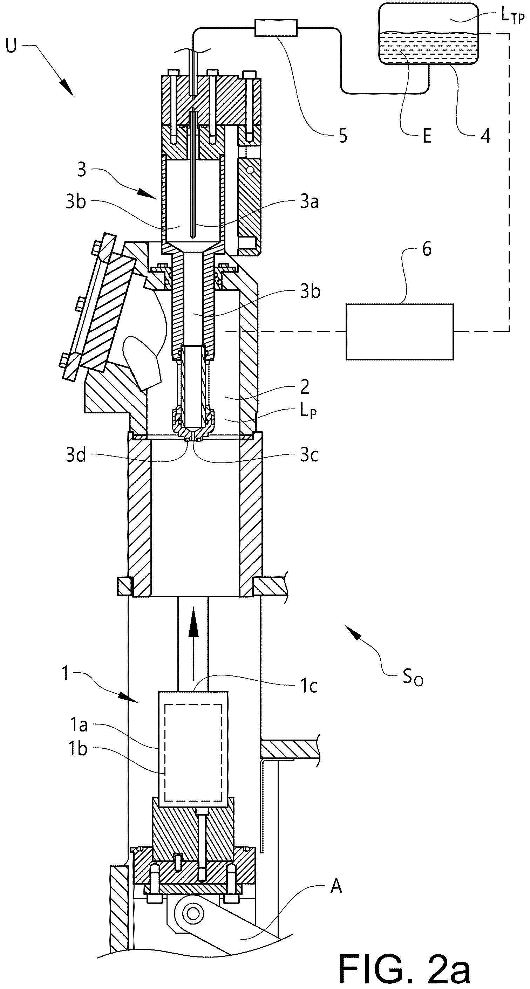

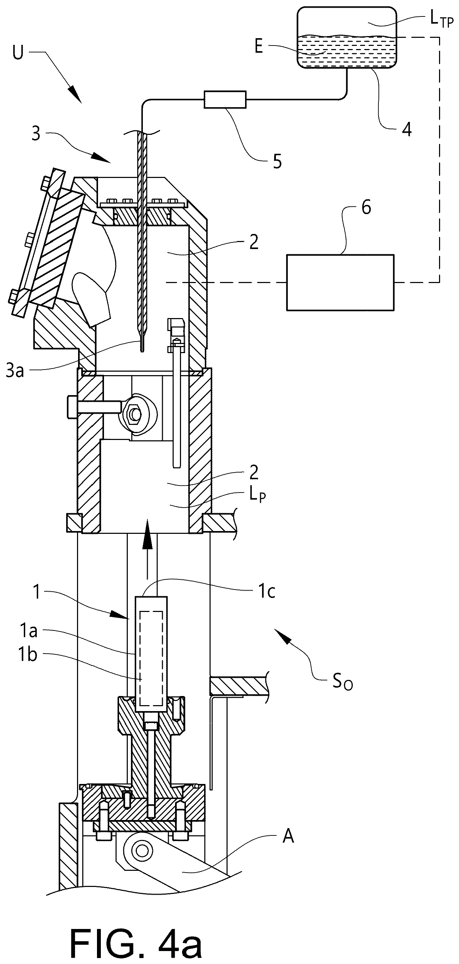

The electrolyte filling unit U further comprises a filling arrangement 3 arranged in the pressure chamber 2, as illustrated in the different embodiments of the electrolyte filling unit U in figures 2a-b and 4a-b. The filling arrangement 3 is connected to a pressure storage tank 4 via a dosing arrangement 5. The pressure storage tank 4 is holding a volume of electrolyte E to be used in the electrolyte filling unit U, and the pressure storage tank 4 is connected to the filling arrangement with suitable hoses or conduits. The pressure storage tank 4 is in the shown embodiments arranged outside the pressure chamber 2. The dosing arrangement 5 is used for distributing a volume of electrolyte E from the pressure storage tank 4 to the filling arrangement 3. For the different embodiments, the filling arrangement 3 comprises a filling nozzle 3a that is dispensing electrolyte E supplied from the pressure storage tank 4. The pressure storage tank 4 is arranged as a pressure tank with a controlled pressure environment. The pressure chamber 2 and the pressure storage tank 4 are each connected to a pressure control device 6 that is used for controlling the pressure levels in the pressure chamber 2 and in the pressure storage tank 4 respectively. In the figures, the pressure control device 6 is illustrated as one unit, but it should be understood that the pressure control device 6 could be arranged as separate control units for the pressure chamber 2 and the pressure storage tank 4 respectively. The pressure control device 6 may further control the pressure in components arranged in communication with the pressure chamber 2.

The dosing arrangement 5 may be arranged as a valve unit U_{V} or a pump unit P_{V}, and the filling of electrolyte E from the pressure storage tank 4 via the filling arrangement 3 into the battery casing 1a is controlled by the valve unit U_{V} or the pump unit P_{V}. Any suitable valve unit U_{V} or pump unit P_{V} may be used for controlling the filling of electrolyte E from the pressure storage tank 4 via the filling arrangement 3 into the battery casing 1a.

In specific embodiments, the dosing arrangement 5 is arranged as a valve unit U_{V} configured as a time pressure valve unit, where a filling time is controlled based on the pressure difference across the valve unit U_{V} for dispensing a specific filling volume. The filling of electrolyte E from the pressure storage tank 4 via the filling arrangement 3 into the battery casing 1a is controlled by the time pressure valve unit. Any suitable conventional valve type may be used. In embodiments, spray valves, precision dispenser valves, volumetric dispensing valves, or jet dispensing valves may be used.

The pressure chamber 2 is arranged as a closed space that is establishing a sealed off and controlled pressure environment when filling electrolyte E into the battery cell structure 1 when arranged in the pressure chamber 2. In this way, the pressure in the pressure chamber 2, and the pressure around and inside the battery cell structure 1, can be controlled by the electrolyte filling unit U.

The electrolyte filling unit U suitably comprises a control unit that is controlling the pressure in the pressure chamber 2 via the pressure control device 6 and in the pressure storage tank 4 via the pressure control device 6, and controlling the electrolyte filling operation via the filling arrangement 3. During the electrolyte filling operation, different pressure levels L_{P} will occur in the pressure chamber 2 and different tank pressure levels L_{TP} will occur in the pressure storage tank 4. For example, both negative pressure levels L_{PNEG} as well as positive pressure levels L_{PPOS} are obtained in the pressure chamber 2, as will be further described in connection to the different embodiments below.

The electrolyte filling unit U is as described above arranged for filling electrolyte E in the battery cell structure 1, where the battery cell structure 1 comprises a battery casing 1a and an electrode assembly 1b arranged within the battery casing 1a. During an electrolyte filling operation, the pressure chamber 2 is applying a negative pressure level L_{PNEG} around and inside the battery cell structure 1 when arranged in the pressure chamber 2, and when the negative pressure level L_{PNEG} is established, the filling arrangement 3 is starting the filling of electrolyte E from the pressure storage tank 4 via the dosing arrangement 5 into the battery casing 1a. Thereafter, the pressure chamber 2 is establishing a positive pressure level L_{PPOS} around and inside the battery cell structure 1, by increasing the pressure from the negative pressure level L_{PNEG} to a positive pressure level L_{PPOS}. Simultaneously, when filling electrolyte E, the tank pressure level is controlled such that the tank pressure level L_{PT} in the pressure storage tank 4 constantly is higher than the pressure level L_{P} in the pressure chamber 2. The filling arrangement 3 is continuing the filling of electrolyte E from the pressure storage tank 4 via the dosing arrangement 5 into the battery casing 1a, until a final filling volume V_{F} of electrolyte E is dispensed into the battery casing 1a via the filling nozzle 3a of the filling arrangement 3.

The step of continuing the filling of electrolyte E is performed when increasing the pressure from the negative pressure level L_{PNEG} to the positive pressure level L_{PPOS} and/or when the positive pressure level L_{PPOS} is established, and electrolyte E is filled from the pressure storage tank 4 via the dosing arrangement 5 and the filling arrangement 3 into the battery casing 1a, until the final filling volume V_{F} of electrolyte E is dispensed into the battery casing 1a via the filling arrangement 3.

During the electrolyte filling operation, the negative pressure level L_{PNEG} is first applied in the pressure chamber 2 for evacuating air or other gases from the battery cell structure before filling electrolyte E. The negative pressure level L_{PNEG} is in this way preventing air or other gases from being present in the battery casing 1a when the electrolyte E is filled into the battery cell structure 1 for an efficient filling process. The pressure in the pressure chamber 2 is thereafter increased for supporting the flow of electrolyte into the electrode assembly 1b. The positive pressure level L_{PPOS} is efficiently pushing the electrolyte E into the battery casing 1a with the electrode assembly 1b for a fast filling operation.

The pressure chamber 2 may have any suitable pressure chamber construction that enables high pressure variations and is withstanding the different pressure levels during the electrolyte filling operation. The pressure level L_{P} in the pressure chamber 2 is controlled by the pressure control device 6 of the electrolyte filling unit U during the electrolyte filling operation. The pressure control device 6 of the pressure chamber 2 may be arranged with a vacuum pump and a compressor for establishing desired pressure levels in the pressure chamber 2. Suitable pressure sensors are used for measuring the pressure level L_{P} in the pressure chamber 2.

The pressure storage tank 4 may have any suitable pressure tank construction that enables high pressure variations and is withstanding different pressure levels during the electrolyte filling operation. The tank pressure level L_{TP} in the pressure storage tank 4 is controlled by the pressure control device 6 of the electrolyte filling unit U during the electrolyte filling operation. The pressure control device 6 of the pressure storage tank 4 may be arranged with a vacuum pump and a compressor for establishing desired pressure levels in the pressure storage tank 4. Suitable pressure sensors are used for measuring the tank pressure level L_{TP} in the pressure storage tank 4.

During the electrolyte filling operation, the electrolyte filling unit U is controlling the tank pressure level L_{TP} in the pressure storage tank 4 relative to the pressure level L_{P} in the pressure chamber 2, such that the tank pressure level L_{PT} in the pressure storage tank 4 constantly is higher than the pressure level L_{P} in the pressure chamber 2. In this way, the tank pressure level L_{PT} in the pressure storage tank 4 is always higher than the pressure level L_{P} in the pressure chamber 2 during filling of electrolyte E from the pressure storage tank 4 via the dosing arrangement 5 and the filling arrangement 3 into the battery casing 1a. By controlling the tank pressure level L_{PT} in the pressure storage tank 4 constantly higher than the pressure level L_{P} in the pressure chamber 2, the pressure difference across the dosing arrangement 5 can be controlled for avoiding too high pressure difference values that may damage the dosing arrangement 5.

In specific embodiments of the electrolyte filling unit U, the electrolyte filling unit U is configured for establishing a pre-determined pressure difference P_{Δ} across the dosing arrangement 5 during filling of electrolyte E from the pressure storage tank 4 via the dosing arrangement 5 and the filling arrangement 3 into the battery casing 1a arranged in the pressure chamber 2. The pre-determined pressure difference P_{Δ} has a pressure difference value V_{Δ} determined as the difference between the tank pressure level L_{TP} in the pressure storage tank 4 and the pressure level L_{P} in the pressure chamber 2. With this configuration, there is always a pressure difference across the dosing arrangement 5 when filling electrolyte, such that the tank pressure level L_{PT} in the pressure storage tank 4 constantly is higher than the pressure level L_{P} in the pressure chamber 2. The pre-determined pressure difference P_{Δ} may have a pressure difference value V_{Δ} that is varying during the electrolyte filling operation. The pressure difference value V_{Δ} may be controlled to be lower than a pre-determined maximum pressure difference value V_{ΔMAX} during filling of electrolyte E from the pressure storage tank 4 via the dosing arrangement 5 and the filling arrangement 3 into the battery casing 1a. The tank pressure level L_{TP} in the pressure storage tank 4 is then controlled by the electrolyte filling unit U to be higher than the pressure level L_{P} in the pressure chamber 2 and lower than the sum of the pressure level L_{P} in the pressure chamber 2 and the maximum pressure difference value V_{ΔMAX}. In this way, the pressure difference across the dosing arrangement 5 will never be higher than the maximum pressure difference value V_{ΔMAX} during the electrolyte filling operation. Certain valve types may for example be designed to withstand a specific maximum pressure difference, and when using the maximum pressure difference value V_{ΔMAX} damage to the valve type used could be prevented.

Suitably, the maximum pressure difference value V_{ΔMAX} is in the range of 0.05-0.3 MPa, preferably in the range of 0.1-0.2 MPa, and more preferably in the range of 0.1-0.15 MPa.

In further specific embodiments, the pressure difference value V_{Δ} is a constant pressure difference value V_{ΔC} during filling of electrolyte E from the pressure storage tank 4 via the dosing arrangement 5 and the filling arrangement 3 into the battery casing 1a. The tank pressure level L_{TP} in the pressure storage tank 4 is then controlled by the electrolyte filling unit U to follow the pressure level L_{P} in the pressure chamber 2 by the constant pressure difference value V_{ΔC}. With this specific controlling of the respective pressure levels in the pressure chamber 2 and the pressure storage tank 4, the pressure difference value V_{Δ} is always the same when filling electrolyte E, and the constant pressure difference value V_{ΔC} may be determined based on the type of the dosing arrangement 5 used. Certain valve types may for example be designed to withstand a specific maximum pressure difference, and when using the constant pressure difference value V_{ΔC} damage to the valve type used could be prevented.

Suitably, the constant pressure difference value V_{ΔC} is in the range of 0.05-0.3 MPa, preferably in the range of 0.05-0.2 MPa, and more preferably in the range of 0.05-0.15 MPa.

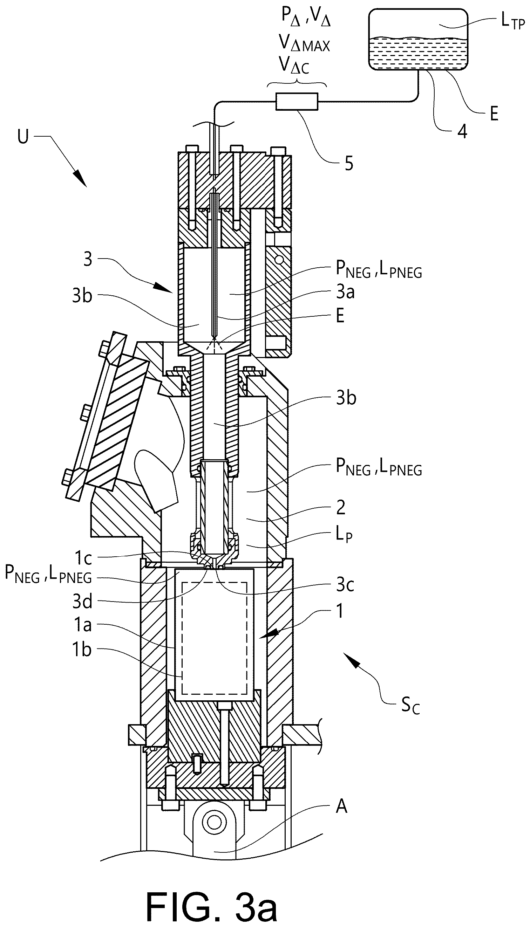

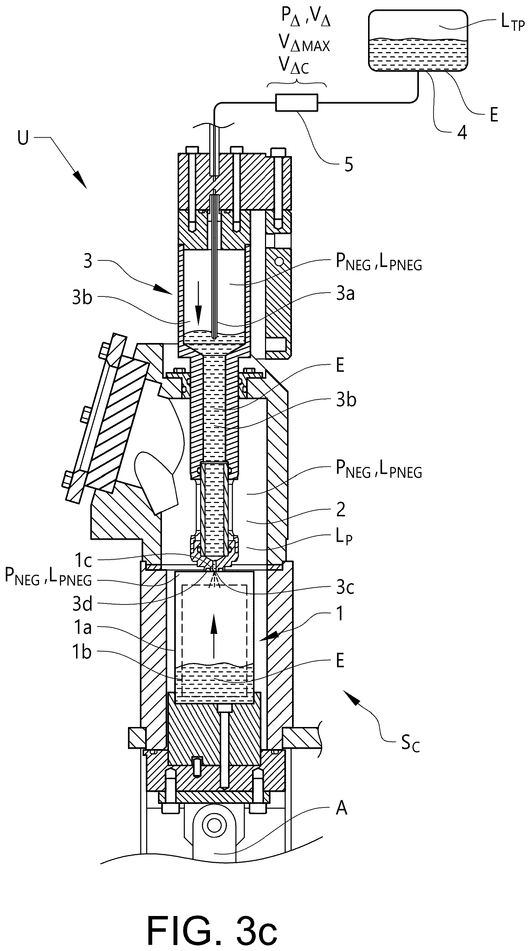

A first embodiment of an electrolyte filling unit U with a pressure chamber 2 is schematically shown in figures 2a-b and 3a-e. The electrolyte filling unit U according to this embodiment is suitable for filling battery cell structures 1 of the type illustrated in figure 2c, where the battery casing 1a comprises an upper lid structure with a fill opening 1c, or other battery types where a filling arrangement 3 arranged in the pressure chamber 2 can engage the battery cell structure 1, as will be further described below. The filling arrangement 3 comprises in this embodiment a filling nozzle 3a and a filling chamber 3b. The filling arrangement 3 is connected to a pressure storage tank 4 for holding a volume of electrolyte E, and the pressure storage tank 4 is arranged outside the pressure chamber 2. The filling nozzle 3a is fluidly connected to the pressure storage tank 4 via a dosing arrangement 5, as described above. During the electrolyte filling operation, electrolyte E is flowing from the pressure storage tank 4 to the filling nozzle 3a, and electrolyte E is dispensed from the pressure storage tank 4 to the filling arrangement 3 via the dosing arrangement 5. The filling nozzle 3a is extending into the filling chamber 3b, and the filling nozzle 3a is used for dispensing a filling volume of electrolyte E into the filling chamber 3b. The dosing arrangement 5 is used for allowing or preventing the flow of electrolyte E from the pressure storage tank 4 to the filling nozzle 3a, and the dosing arrangement 5 may further be used for an accurate dosing of a volume of electrolyte E to be used in the electrolyte filling operation, defined as a final filling volume V_{F}. The final filling volume V_{F} is a volume of electrolyte E needed for a complete filling of electrolyte E into the battery cell structure 1. The final filling volume V_{F} is thus the complete electrolyte volume needed for the electrolyte filling operation. In some applications, for example for battery cell structures of large dimensions, an additional filling step, also called re-filling, subsequent to a battery formation process, where the battery cell structure is charged with an electrical current is required. In these applications, the final filling volume V_{F} is thus the complete electrolyte volume needed for the electrolyte filling operation preceding any battery formation processes.

In the embodiment shown in figures 2a-b and 3a-e, the filling chamber 3b is attached to the pressure chamber 2, and the filling chamber 3b is extending into the pressure chamber 2. In this way, at least a part of the filling chamber 3b is arranged in the pressure chamber 2. Suitably, the pressure chamber 2 and the filling chamber 3b are arranged as integrated parts, where during the electrolyte filling operation the varying pressure levels in the pressure chamber 2 and the filling chamber 3b are the same.

The filling chamber 3b comprises a filling orifice 3c, as shown in figures 2a-b and 3a-e. The filling orifice 3c is connected to the fill opening 1c of the battery cell structure 1 before and during filling electrolyte E into the battery casing 1a through the fill opening 1c. The filling arrangement 3 is engaging the battery cell structure 1 during the filling operation through the connection between the filling orifice 3c and the fill opening 1c. The filling orifice 3c is connected to the fill opening 1c of the battery cell structure 1 during the electrolyte filling operation, allowing electrolyte E to flow from the filling chamber 3b via the filling orifice 3c into the battery casing 1a through the fill opening 1c.

Suitably, the filling arrangement 3 comprises a sealing arrangement 3d arranged in connection to the filling orifice 3c. The sealing arrangement 3d is engaging the fill opening 1c and/or an area around the fill opening 1c for establishing a fluid tight seal between the filling arrangement 3 and the battery cell structure 1, preventing electrolyte E from leaking during the electrolyte filling operation. The sealing arrangement 3d may be arranged as a gasket attached to the filling chamber 3b, and the gasket may be made of a suitable material, such as rubber or other elastomeric materials. The sealing arrangement 3d may further prevent air or other gases in the pressure chamber 2 from being pushed into the battery casing 1a when positive pressure levels L_{PPOS} are applied.

An exemplified electrolyte filling operation will in the following be described in connection to figures 2a-b and 3a-e. In figures 2a-b, the battery cell structure 1 is in an open state S_{O} of the pressure chamber 2 placed on a bottom part of the pressure chamber 2, and moved into the pressure chamber 2 by an upwards movement by means of a suitable actuator A for arranging the pressure chamber 2 in a closed state S_{C}. After arranging the battery cell structure 1 in the pressure chamber 2 and closing the pressure chamber 2 into the closed state S_{C}, a sealed off and controlled pressure environment is established in the pressure chamber 2, around and inside the battery cell structure 1 arranged in the pressure chamber 2, and in the filling arrangement 3. By arranging the battery cell structure 1 in the pressure chamber 2, the filling orifice 3c of the filling chamber 3b is connected to the fill opening 1c of the battery cell structure 1. When connecting the filling orifice 3c to the fill opening 1c, the sealing arrangement 3d is engaging the fill opening 1c and/or an area around the fill opening 1c for establishing a fluid tight seal between the filling chamber 3b and the battery casing 1a. The filling orifice 3c of the filling chamber 3b is connected to the fill opening 1c before filling electrolyte E into the battery casing 1a through the fill opening 1c. The established fluid tight seal is efficiently preventing leakage of electrolyte E during the electrolyte filling operation.

When the battery cell structure 1 has been positioned in the pressure chamber 2, as described above and shown in figures 2b and 3a, and the pressure chamber 2 has been thoroughly closed into the closed state S_{C}, the pressure level L_{P} in the pressure chamber 2 is controlled. A negative pressure P_{NEG} is initially applied in the pressure chamber 2. With negative pressure P_{NEG}, is meant a pressure level below atmospheric pressure, but above absolute zero pressure. By applying the negative pressure P_{NEG}, air or other gases are evacuated from the pressure chamber 2, the filling chamber 3b, and from the battery cell structure 1 arranged in the pressure chamber 2. Simultaneously, the tank pressure level L_{TP} in the pressure storage tank 4 relative to the pressure level L_{P} in the pressure chamber 2 is controlled such that the tank pressure level L_{PT} in the pressure storage tank 4 constantly is higher than the pressure level L_{P} in the pressure chamber 2, as described in the different pressure controlling embodiments above. Each of the pressure chamber 2 and the pressure storage tank 4 is connected to a pressure control device 6 that is used for controlling the respective pressure levels.

The negative pressure level L_{PNEG} is suitably less than or equal to 0.02 MPa, preferably less than or equal to 0.001 MPa, more preferably less than or equal to 0.0005 MPa. The negative pressure level L_{PNEG} used may for example depend on the construction of the pressure chamber, the type of battery cell structure used, and the electrolyte composition. The defined values for the negative pressure levels L_{PNEG} are referring to absolute pressure. These low pressure levels are securing that air or other gases are efficiently drawn out from the battery casing 1a and the electrode assembly 1b, preparing the battery cell structure 1 for filling of electrolyte E. The negative pressure level L_{PNEG} is maintained for a suitable time period for allowing trapped air or other gases in the battery cell structure 1 to escape via the fill opening 1c. In nonlimiting examples, the time period for maintaining the negative pressure level L_{PNEG} may for example range between 60-120 seconds depending on the type of battery cell structure. The determination of suitable time periods may be established through testing different battery types, and may vary between different battery types.

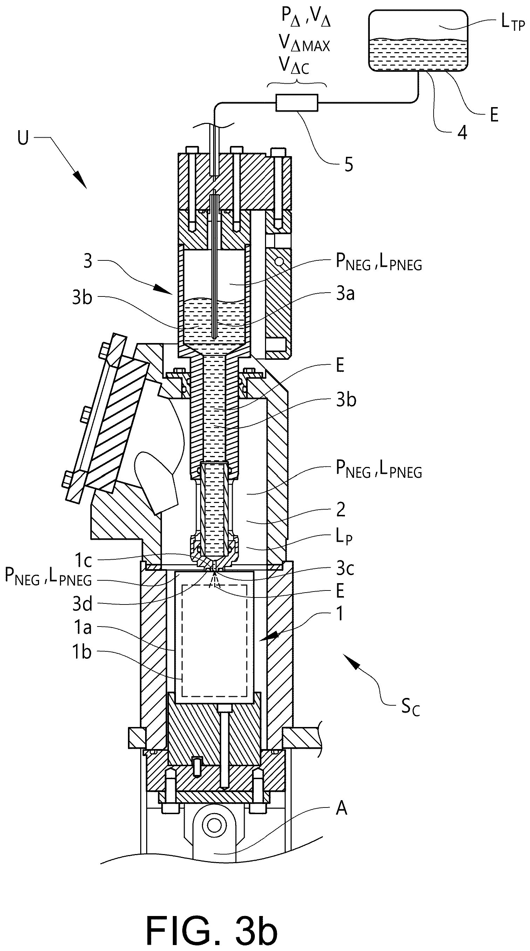

By applying the negative pressure P_{NEG} in the pressure chamber 2, the negative pressure level L_{PNEG} is built up in the pressure chamber 2, around and inside the battery cell structure 1, and in the filling chamber 3b. When the negative pressure level L_{PNEG} and the corresponding tank pressure level L_{TP} are established, electrolyte E is filled from the pressure storage tank 4 via the dosing arrangement 5 and the filling arrangement 3 into the battery casing 1a. The dosing arrangement 5 is opened to allow the flow of electrolyte E from the pressure storage tank 4 to the filling nozzle 3a, as indicated in figure 3a. **In** this way, electrolyte E is flowing into the filling chamber 3b from the filling nozzle 3a, and from the filling chamber 3b into the battery casing 1a, as shown in figures 3b-c.

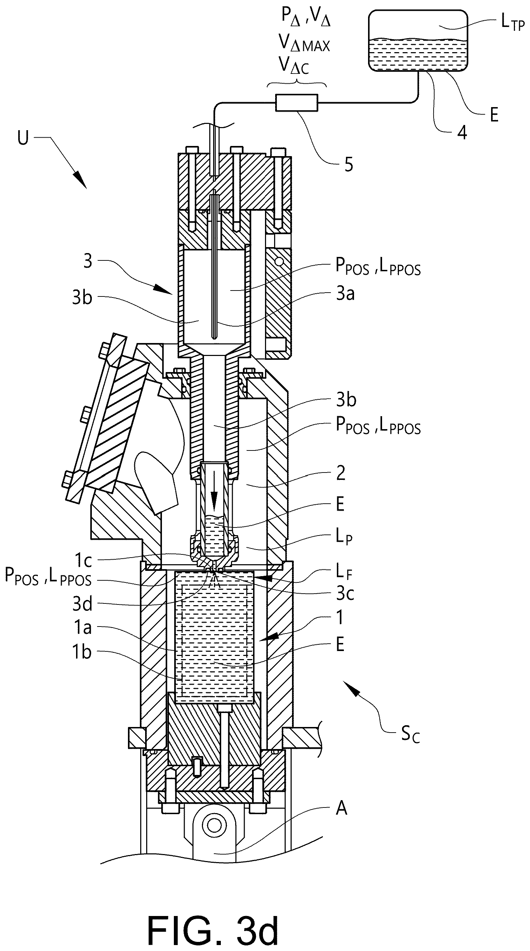

The negative pressure level L_{PNEG} is maintained until a pre-determined filling parameter is achieved. Such a pre-determined fill parameter may for example be a fill level L_{F} of electrolyte E in the battery casing 1a above the electrode assembly 1b, as exemplified in figure 3d. With the expression above the electrode assembly 1b is meant that the electrolyte E in the battery casing 1a is reaching above the electrode assembly 1b, such that the electrode assembly 1b is fully covered with electrolyte E. In other embodiments, the pre-determined filling parameter may be a specific fill level of electrolyte E in the battery casing 1a, a stabilized level of electrolyte E in the filling chamber 3b, or formation of an upper electrolyte surface in the filling chamber 3b. Such pre-determined filling parameters may be evaluated and pre-determined for a specific type of battery cell structure 1 subject to the electrolyte filling operation, for an efficient electrolyte filling operation.

When the pre-determined filling parameter is achieved, the positive pressure P_{POS} is applied in the pressure chamber 2, around and inside the battery cell structure 1, and in the filling arrangement 3, as schematically illustrated in figure 3d. With positive pressure P_{POS}, is meant a pressure level above atmospheric pressure. The positive pressure P_{POS} is applied in the pressure chamber 2 by increasing the pressure from the negative pressure level L_{PNEG} to a positive pressure level L_{PPOS} upon filling electrolyte E from the pressure storage tank 4 via the dosing arrangement 5 and the filling arrangement 3 into the battery casing 1a. Simultaneously, the tank pressure level L_{TP} in the pressure storage tank 4 relative to the pressure level L_{P} in the pressure chamber 2 is controlled such that the tank pressure level L_{PT} in the pressure storage tank 4 constantly is higher than the pressure level L_{P} in the pressure chamber 2, as described in the different pressure controlling embodiments above. The pressure levels are controlled by the pressure control device 6. The positive pressure level L_{PPOS} is suitably at least 0.2 MPa, preferably at least 1 MPa, more preferably at least 1.6 MPa. The defined values for the positive pressure levels L_{PPOS} are referring to absolute pressure. The positive pressure level L_{PPOS} used may for example depend on the construction of the pressure chamber and the type of battery cell structure used. These high pressure levels are efficiently pushing the electrolyte E into the battery casing 1a from the filling chamber 3b, and is further supporting the soaking of electrolyte E into the electrode assembly 1b.

The filling of electrolyte E from the pressure storage tank 4 via the dosing arrangement 5 and the filling arrangement 3 into the battery casing 1a is continued when increasing the pressure level from the negative pressure level L_{PNEG} to the positive pressure level L_{PPOS}, and if needed when the positive pressure level L_{PPOS} is established. The increase in pressure to the positive pressure level L_{PPOS} is supporting the filling process and the positive pressure P_{POS} is pushing the electrolyte E from the filling arrangement 3 into the battery casing 1a via the fill opening 1c, as indicated with the arrow in figure 3d

In other embodiments, the filling of electrolyte E may be stopped when increasing the pressure level from the negative pressure level L_{PNEG} to the positive pressure level L_{PPOS}, and resumed when the positive pressure level L_{PPOS} is reached.

Throughout the electrolyte filling operation, the tank pressure level L_{TP} in the pressure storage tank 4 relative to the pressure level L_{P} in the pressure chamber 2 is continuously controlled, such that the tank pressure level L_{PT} constantly is higher than the pressure level L_{P} in the pressure chamber 2 during filling of electrolyte E from the pressure storage tank 4 via the dosing arrangement 5 and the filling arrangement 3 into the battery casing 1a. The controlling of the respective levels is described in the different pressure controlling embodiments above, with the pressure difference P_{Δ} having the pressure difference value V_{Δ} determined as the difference between the tank pressure level L_{TP} in the pressure storage tank 4 and the pressure level L_{P} in the pressure chamber 2. The pressure difference value V_{Δ} may in embodiments be controlled to be lower than a pre-determined maximum pressure difference value V_{ΔMAX} or controlled to be a constant pressure difference value V_{ΔC}, during filling of electrolyte E from the pressure storage tank 4 via the dosing arrangement 5 and the filling arrangement 3 into the battery casing 1a.

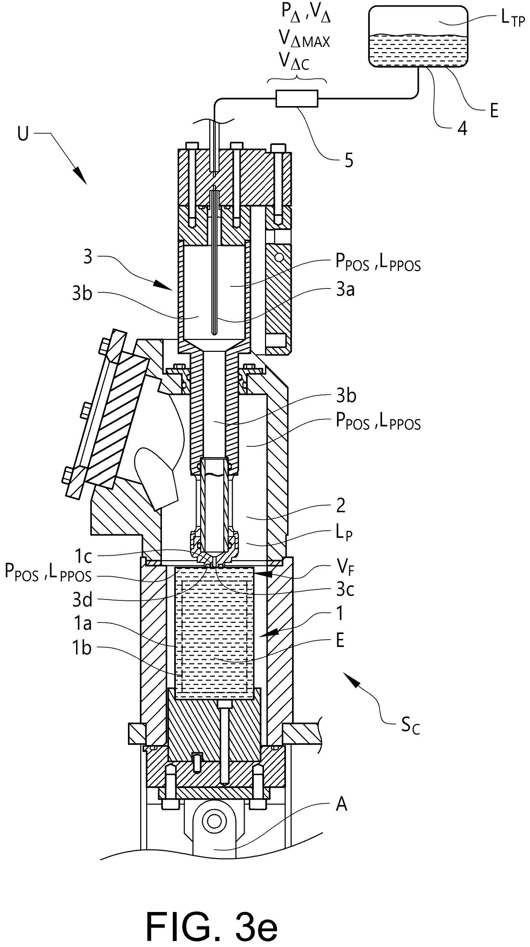

The filling nozzle 3a is during the electrolyte filling operation dispensing the final filling volume V_{F} of electrolyte E. The final filling volume V_{F} of electrolyte E is dispensed into the filling chamber 3b via the filling nozzle 3a, enabling a flow of electrolyte E from the filling chamber 3b via the filling orifice 3c into the battery casing 1a through the fill opening 1c. When the final filling volume V_{F} of electrolyte E is filled into the filling chamber 3b via the filling nozzle 3a, as shown in figure 3e, the dosing arrangement 5 is suitably closed. The final filling volume V_{F} is a volume of electrolyte E needed for a complete filling of electrolyte E into the battery cell structure 1. The final filling volume V_{F} is thus the complete electrolyte volume needed for the electrolyte filling operation.

By having the same pressure levels around and inside the battery cell structure 1 during the electrolyte filling operation, it is ensured that the battery casing 1a is not deforming during the electrolyte filling operation. Thus, the same pressure levels are established inside the battery cell structure 1 and on the outside of the battery cell structure 1.

When the final filling volume V_{F} of electrolyte E is completely filled into the battery cell structure 1, the positive pressure level L_{PPOS} may be maintained to allow the electrolyte E to soak into the electrode assembly 1b. The positive pressure level L_{PPOS} may be maintained a pre-determined time when the final filling volume V_{F} of electrolyte E is dispensed into the battery casing 1a, before reducing the pressure level in the pressure chamber 2. The pre-determined time may be different for different battery types. When reducing the pressure level L_{P} in the pressure chamber 2, the tank pressure level L_{TP} in the pressure storage tank 4 relative to the pressure level L_{P} in the pressure chamber 2 is controlled, as described in the different pressure controlling embodiments above.

After completed filling of electrolyte E, the pressure level in the pressure chamber 2 is reduced. Thus, when the final filling volume V_{F} of electrolyte E is dispensed into the battery casing 1a, the pressure level in the pressure chamber 2 is reduced and thereafter the filled battery cell structure 1 could be removed from the pressure chamber 2.

For an efficient electrolyte filling operation, the final filling volume V_{F} of electrolyte E may be dispensed into the filling chamber 3b via the filling nozzle 3a in a single operational step. There is thus no need to dispense the final filling volume V_{F} of electrolyte E into the filling chamber 3b in a stepwise manner. The final filling volume V_{F} of electrolyte E is allowed to flow into the filling chamber 3b, and thereafter from the filling chamber 3b into the battery cell structure 1. A continuous flow of electrolyte E may in this way be established from the filling chamber 3b via the filling orifice 3c into the battery casing 1a through the fill opening 1c until the final filling volume V_{F} of electrolyte E is dispensed into the battery casing 1a in a single filling operation. With a single filling operation, is meant that the filling of the final filling volume V_{F} of electrolyte E into the battery cell structure 1 is achieved in one single operational step, without the need for moving the battery cell structure 1 away from the pressure chamber 2, or without the need for repeated negative pressure and positive pressure cycles in combination with electrolyte filling. In the single filling operation, the filling of electrolyte E into the battery cell structure 1 is thus achieved in a single operational step.

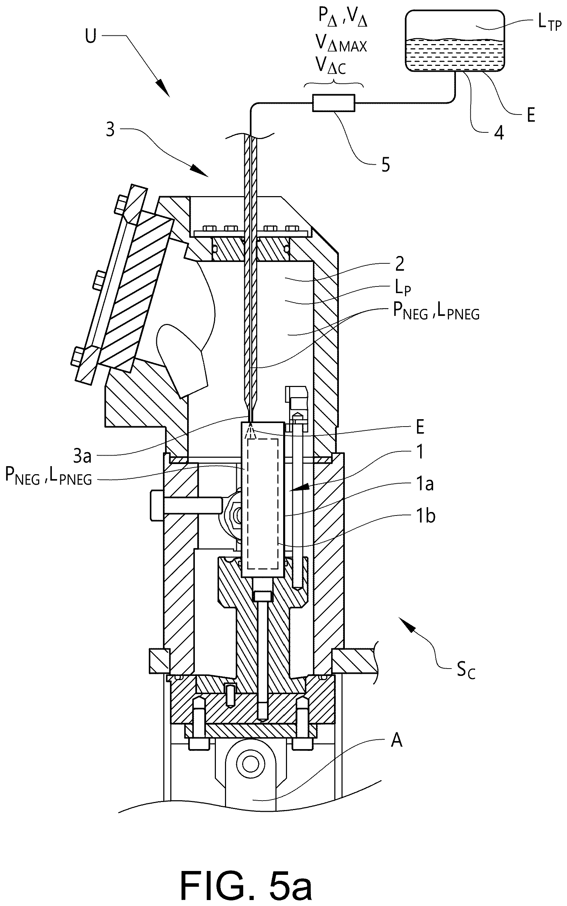

A second embodiment of an electrolyte filling unit U is schematically shown in figures 4a-b and 5a-d. The electrolyte filling unit U according to this embodiment is suitable for filling battery cell structures 1 of the type illustrated in figure 4c, where the battery casing 1a is arranged without an upper lid structure to provide a large fill opening 1c. The filling arrangement 3 comprises a filling nozzle 3a, and the filling nozzle 3a is dispensing a filling volume of electrolyte E directly into the fill opening 1c battery cell structure 1. In this embodiment, the filling arrangement 3 is thus arranged without any filling chamber. The filling nozzle 3a is fluidly connected to a pressure storage tank 4 via a dosing arrangement 5, as described above. During the electrolyte filling operation, electrolyte E is flowing from the pressure storage tank 4 to the filling nozzle 3a. The dosing arrangement 5 is used for allowing or preventing the flow of electrolyte E from the pressure storage tank 4 to the filling nozzle 3a, and the dosing arrangement 5 may further be used for an accurate dosing of a volume of electrolyte E to be used in the electrolyte filling operation, defined as a final filling volume V_{F}. The final filling volume V_{F} is a volume of electrolyte E needed for a complete filling of electrolyte E into the battery cell structure 1. The final filling volume V_{F} is thus the complete electrolyte volume needed for the electrolyte filling operation. In some applications, for example for battery cell structures of large dimensions, an additional filling step, also called re-filling, subsequent to a battery formation process, where the battery cell structure is charged with an electrical current is required. In these applications, the final filling volume V_{F} is thus the complete electrolyte volume needed for the electrolyte filling operation preceding any battery formation processes.

In the embodiment shown in figures 4a-b and 5a-d, the filling nozzle 3a is attached to the pressure chamber 2, and the filling nozzle 3a is extending into the pressure chamber 2. In this way, at least a part of the filling nozzle 3a is arranged inside the pressure chamber 2. Suitably, the pressure chamber 2 and the filling arrangement 3 are arranged as integrated parts, where during the electrolyte filling operation the pressure levels in the pressure chamber 2, and around and inside the battery cell structure 1 arranged in the pressure chamber 2, are the same. The filling nozzle 3a is before filling of electrolyte E arranged in connection to the fill opening 1c of the battery cell structure 1.

An electrolyte filling operation will in the following be described in connection to figures 4a-b and 5a-d. In figures 4a-b, the battery cell structure 1 is in an open state S_{O} of the pressure chamber 2 placed on a bottom part of the pressure chamber 2, and moved into the pressure chamber 2 by an upwards movement by means of a suitable actuator A for arranging the pressure chamber 2 in a closed state S_{C}. After arranging the battery cell structure 1 in the pressure chamber 2 and closing the pressure chamber 2 into the closed state S_{C}, a sealed off and controlled pressure environment is established in the pressure chamber 2, and around and inside the battery cell structure 1 arranged in the pressure chamber 2. By arranging the battery cell structure 1 in the pressure chamber 2, the filling nozzle 3a is in the closed state S_{C} arranged in connection to the fill opening 1c of the battery cell structure 1. In this way, the filling nozzle 3a is arranged in connection to the fill opening 1c of the battery cell structure 1 before filling electrolyte E into the battery casing 1a through the fill opening 1c.

When the battery cell structure 1 has been positioned in the pressure chamber 2, and the pressure chamber 2 has been thoroughly closed into the closed state S_{C}, a negative pressure P_{NEG} is applied in the pressure chamber 2, as illustrated in figure 5a. By applying the negative pressure P_{NEG} in the pressure chamber 2, a negative pressure level L_{PNEG} is built up in the pressure chamber 2, and around and inside the battery cell structure 1, in a similar way as described in the first embodiment above. Simultaneously, the tank pressure level L_{TP} in the pressure storage tank 4 relative to the pressure level L_{P} in the pressure chamber 2 is controlled such that the tank pressure level L_{PT} in the pressure storage tank 4 constantly is higher than the pressure level L_{P} in the pressure chamber 2, as described in the different pressure controlling embodiments above.

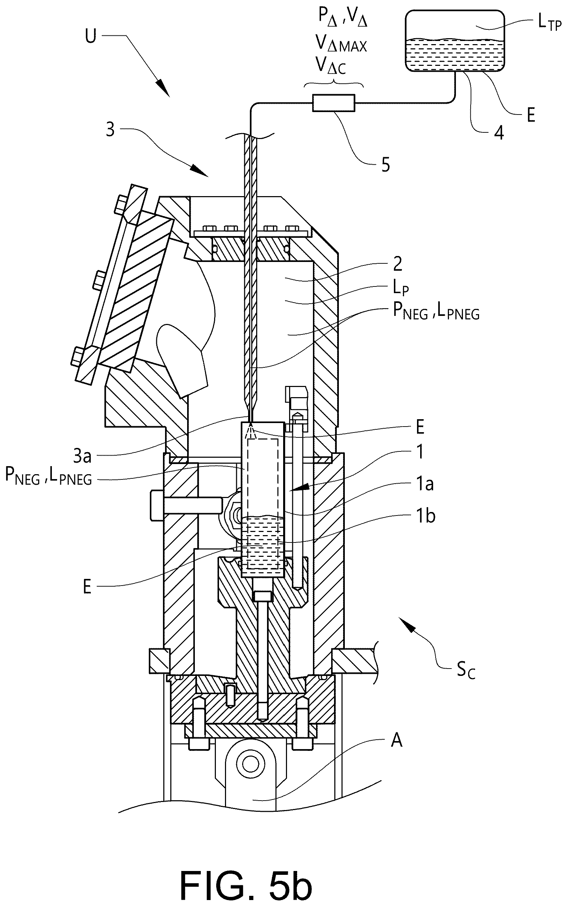

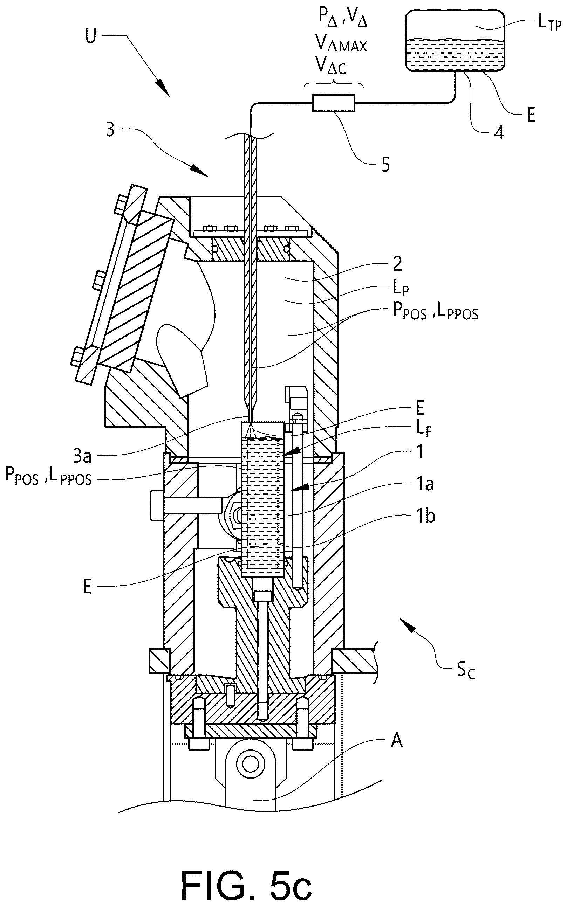

When the negative pressure level L_{PNEG} is established and the battery cell structure 1 is ready for receiving electrolyte E, the dosing arrangement 5 is opened to allow a flow of electrolyte E from the storage tank to the filling nozzle 3a, as indicated in figure 5a. In this way, electrolyte E is flowing from the filling nozzle 3a into the battery casing 1a, as shown in figure 5b. The negative pressure level L_{PNEG} is maintained until a pre-determined filling parameter is achieved. Such a pre-determined fill parameter may for example be a fill level L_{F} of electrolyte E in the battery casing 1a above the electrode assembly 1b, as exemplified in figure 5c. With the expression above the electrode assembly 1b is meant that the electrolyte E in the battery casing 1a is reaching above the electrode assembly 1b, such that the electrode assembly 1b is fully covered with electrolyte E. In other embodiments, the pre-determined filling parameter may be a specific fill level of electrolyte E in the battery casing 1a. Such pre-determined filling parameters may be evaluated and pre-determined for a specific type of battery cell structure 1 subject to the electrolyte filling operation, for an efficient electrolyte filling operation.

It should be understood that the electrolyte E needs to be soaked into the electrode assembly 1b, and therefore the final filling volume V_{F} of electrolyte E would not flow immediately from the filling nozzle 3b into the battery casing 1a. When reaching a certain fill level, the flow of electrolyte E from the filling nozzle 3a may be reduced or interrupted.

When the pre-determined filling parameter is achieved, a positive pressure P_{POS} is applied in the pressure chamber 2, and around and inside the battery cell structure 1, as schematically illustrated in figure 5c. The positive pressure P_{POS} is applied by increasing the pressure from the negative pressure level L_{PNEG} to a positive pressure level L_{PPOS}, in a similar way as described in the first embodiment above. Simultaneously, the tank pressure level L_{TP} in the pressure storage tank 4 relative to the pressure level L_{P} in the pressure chamber 2 is controlled such that the tank pressure level L_{PT} in the pressure storage tank 4 constantly is higher than the pressure level L_{P} in the pressure chamber 2, as described in the different pressure controlling embodiments above.

The filling of electrolyte E into the battery cell structure 1 via the fill opening 1c from the filling arrangement 3 is continued when increasing the pressure level from the negative pressure level L_{PNEG} to the positive pressure level L_{PPOS}, and if needed when the positive pressure level L_{PPOS} is established. The increase in pressure to the positive pressure level L_{PPOS} is supporting the filling process and the positive pressure P_{POS} is pushing the electrolyte E into the battery casing 1a. The flow of electrolyte E from the filling nozzle 3a into the battery casing 1a through the fill opening 1c is continued until the final filling volume V_{F} of electrolyte E is dispensed into the battery casing 1a. The final filling volume V_{F} of electrolyte E is suitably dispensed into the battery casing 1a in a single filling operation, as described above.

By having the same pressure levels around and inside the battery cell structure 1 during the electrolyte filling operation, it is ensured that the battery casing 1a is not deforming during the electrolyte filling operation.

When the final filling volume V_{F} of electrolyte E is filled into the battery casing 1a from the filling nozzle 3a, the dosing arrangement 5 is suitably closed. It should be understood that the electrolyte E needs to be soaked into the electrode assembly 1b, and therefore a final filling volume V_{F} of electrolyte E would not flow immediately from the filling nozzle 3b into the battery casing 1a.

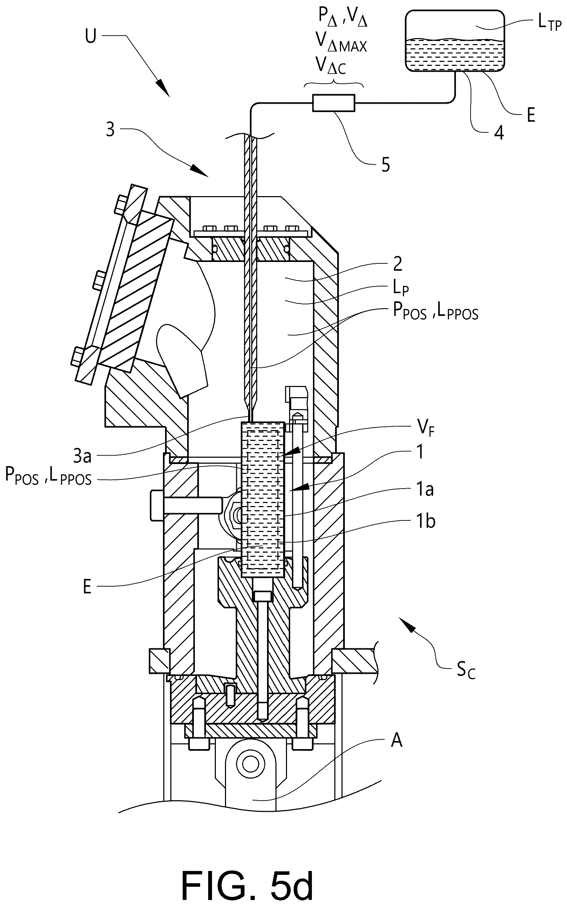

When the final filling volume V_{F} of electrolyte E is completely filled into the battery cell structure 1, as shown in figure 5d, the positive pressure level L_{PPOS} may be maintained to allow the electrolyte E to soak into the electrode assembly 1b. The positive pressure level L_{PPOS} may be maintained a pre-determined time when the final filling volume V_{F} of electrolyte E is dispensed into the battery casing 1a, before reducing the pressure level in the pressure chamber 2. The pre-determined time may be different for different battery types.

After completed filling of electrolyte E, the pressure level in the pressure chamber 2 is reduced. Thus, when the final filling volume V_{F} of electrolyte E is dispensed into the battery casing 1a, the pressure level in the pressure chamber 2 is reduced and thereafter the filled battery cell structure 1 could be removed from the pressure chamber 2.

Throughout the electrolyte filling operation, the tank pressure level L_{TP} in the pressure storage tank 4 relative to the pressure level L_{P} in the pressure chamber 2 is continuously controlled, such that the tank pressure level L_{PT} constantly is higher than the pressure level L_{P} in the pressure chamber 2 during filling of electrolyte E from the pressure storage tank 4 via the dosing arrangement 5 and the filling arrangement 3 into the battery casing 1a. The controlling of the respective levels is described in the different pressure controlling embodiments above, with the pressure difference P_{Δ} having the pressure difference value V_{Δ} determined as the difference between the tank pressure level L_{TP} in the pressure storage tank 4 and the pressure level L_{P} in the pressure chamber 2. The pressure difference value V_{Δ} may in embodiments be controlled to be lower than a pre-determined maximum pressure difference value V_{ΔMAX} or controlled to be a constant pressure difference value V_{ΔC}, during filling of electrolyte E from the pressure storage tank 4 via the dosing arrangement 5 and the filling arrangement 3 into the battery casing 1a.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the appended claims. Reference signs mentioned in the claims should not be seen as limiting the extent of the matter protected by the claims, and their sole function is to make claims easier to understand.

### REFERENCE SIGNS

- 1:: Battery cell structure
- 1a:: Battery casing
- 1b:: Electrode assembly
- 1c:: Fill opening
- 2:: Pressure chamber
- 3:: Filling arrangement
- 3a:: Filling nozzle
- 3b:: Filling chamber
- 3c:: Filling orifice
- 3d:: Sealing arrangement
- 4:: Pressure storage tank
- 5:: Dosing arrangement
- 6:: Pressure source

- A:: Actuator
- E:: Electrolyte
- L_{F}:: Fill level
- L_{P}:: Pressure level
- L_{PNEG}:: Negative pressure level
- L_{PPOS}:: Positive pressure level
- L_{TP}:: Tank pressure level
- P_{Δ}:: Pressure difference
- P_{NEG}:: Negative pressure
- P_{POS}:: Positive pressure
- U:: Electrolyte filling unit
- U_{P}:: Pump unit
- U_{V}:: Valve unit
- V_{Δ}:: Pressure difference value
- V_{ΔMAX}.: Maximum pressure difference value
- V_{ΔC}:: Constant pressure difference value
- V_{F}:: Filling volume

## Claims

1. A method for controlling an electrolyte filling unit (U) arranged for filling electrolyte (E) in a battery cell structure (1) comprising a battery casing (1a) and an electrode assembly (1b) arranged within the battery casing (1a), wherein the electrolyte filling unit (U) comprises a pressure chamber (2), a filling arrangement (3) arranged in the pressure chamber (2), and a pressure storage tank (4) for holding a volume of electrolyte (E), wherein the filling arrangement (3) is fluidly connected to the pressure storage tank (4) via a dosing arrangement (5), wherein the method comprises the steps:
applying a negative pressure (P_{NEG}) in the pressure chamber (2) for establishing a negative pressure level (L_{PNEG}) around and inside the battery cell structure (1) when arranged in the pressure chamber (2);
filling electrolyte (E) from the pressure storage tank (4) via the dosing arrangement (5) and the filling arrangement (3) into the battery casing (1a), when the negative pressure level (L_{PNEG}) is established;
applying a positive pressure (P_{POS}) in the pressure chamber (2) by increasing the pressure from the negative pressure level (L_{PNEG}) to a positive pressure level (L_{PPOS}) upon filling electrolyte (E) from the pressure storage tank (4) via the dosing arrangement (5) and the filling arrangement (3) into the battery casing (1a);
continuing the filling of electrolyte (E) from the pressure storage tank (4) via the dosing arrangement (5) and the filling arrangement (3) into the battery casing (1a), until a final filling volume (V_{F}) of electrolyte (E) is dispensed into the battery casing (1a) via the filling arrangement (3);
controlling a tank pressure level (L_{TP}) in the pressure storage tank (4) relative to the pressure level (L_{P}) in the pressure chamber (2), such that the tank pressure level (L_{PT}) constantly is higher than the pressure level (L_{P}) in the pressure chamber (2) during filling of electrolyte (E) from the pressure storage tank (4) via the dosing arrangement (5) and the filling arrangement (3) into the battery casing (1a).

2. The method according to claim 1,
wherein the method further comprises the steps: establishing a pre-determined pressure difference (P_{Δ}) across the dosing arrangement (5) during filling of electrolyte (E) from the pressure storage tank (4) via the dosing arrangement (5) and the filling arrangement (3) into the battery casing (1a) arranged in the pressure chamber (2), wherein the pressure difference (P_{Δ}) has a pressure difference value (V_{Δ}) determined as the difference between the tank pressure level (L_{TP}) in the pressure storage tank (4) and the pressure level (L_{P}) in the pressure chamber (2).

3. The method according to claim 2,
wherein the pressure difference value (V_{Δ}) is lower than a pre-determined maximum pressure difference value (V_{ΔMAX}) during filling of electrolyte (E) from the pressure storage tank (4) via the dosing arrangement (5) and the filling arrangement (3) into the battery casing (1a), wherein the tank pressure level (L_{TP}) in the pressure storage tank (4) is controlled to be higher than the pressure level (L_{P}) in the pressure chamber (2) and lower than the sum of the pressure level (L_{P}) in the pressure chamber (2) and the maximum pressure difference value (V_{ΔMAX}).

4. The method according to claim 3,
wherein the maximum pressure difference value (V_{ΔMAX}) is in the range of 0.05-0.3 MPa, preferably in the range of 0.1-0.2 MPa, and more preferably in the range of 0.1-0.15 MPa.

5. The method according to any of claims 2 to 4,
wherein the pressure difference value (V_{Δ}) is a constant pressure difference value (V_{ΔC}) during filling of electrolyte (E) from the pressure storage tank (4) via the dosing arrangement (5) and the filling arrangement (3) into the battery casing (1a), wherein the tank pressure level (L_{TP}) in the pressure storage tank (4) is controlled to follow the pressure level (L_{P}) in the pressure chamber (2) by the constant pressure difference value (V_{ΔC}).

6. The method according to claim 5,
wherein the constant pressure difference value (V_{ΔC}) is in the range of 0.05-0.3 MPa, preferably in the range of 0.05-0.2 MPa, and more preferably in the range of 0.05-0.15 MPa.

7. The method according to any preceding claim,
wherein the step of continuing the filling of electrolyte (E) is performed when increasing the pressure from the negative pressure level (L_{PNEG}) to the positive pressure level (L_{PPOS}) and/or when the positive pressure level (L_{PPOS}) is established, upon filling electrolyte (E) from the pressure storage tank (4) via the dosing arrangement (5) and the filling arrangement (3) into the battery casing (1a), until the final filling volume (V_{F}) of electrolyte (E) is dispensed into the battery casing (1a) via the filling arrangement (3).

8. The method according to any preceding claim,
wherein the method further comprises the step: applying the negative pressure level (L_{PNEG}) less than or equal to 0.02 MPa, preferably less than or equal to 0.001 MPa, more preferably less than or equal to 0.0005 MPa.

9. The method according to any preceding claim,
wherein the method further comprises the step: applying the positive pressure level (L_{PPOS}) to at least 0.2 MPa, preferably at least 1 MPa, more preferably at least 1.6 MPa.

10. An electrolyte filling unit (U) arranged for filling electrolyte (E) in a battery cell structure (1) comprising a battery casing (1a) and an electrode assembly (1b) arranged within the battery casing (1a), wherein the electrolyte filling unit (U) comprises a pressure chamber (2), a filling arrangement (3) arranged in the pressure chamber (2), and a pressure storage tank (4) for holding a volume of electrolyte (E), wherein the filling arrangement (3) is fluidly connected to the pressure storage tank (4) via a dosing arrangement (5),
wherein the pressure chamber (2) is configured for applying a negative pressure level (L_{PNEG}) around and inside the battery cell structure (1) when arranged in the pressure chamber (2);
wherein when the negative pressure level (L_{PNEG}) is established, the filling arrangement (3) is configured for filling electrolyte (E) from the pressure storage tank (4) via the dosing arrangement (5) into the battery casing (1a);
wherein the pressure chamber (2) is configured for establishing a positive pressure level (L_{PPOS}) around and inside the battery cell structure (1), by increasing the pressure from the negative pressure level (L_{PNEG}) to a positive pressure level (L_{PPOS});
wherein the filling arrangement (3) is configured for continuing the filling of electrolyte (E) from the pressure storage tank (4) via the dosing arrangement (5) into the battery casing (1a), until a final filling volume (V_{F}) of electrolyte (E) is dispensed into the battery casing (1a) via the filling arrangement (3);
wherein the electrolyte filling unit (U) is configured for controlling a tank pressure level (L_{TP}) in the pressure storage tank (4) relative to the pressure level (L_{P}) in the pressure chamber (2), such that the tank pressure level (L_{PT}) constantly is higher than the pressure level (L_{P}) in the pressure chamber (2) during filling of electrolyte (E) from the pressure storage tank (4) via the dosing arrangement (5) and the filling arrangement (3) into the battery casing (1a).

11. The electrolyte filling unit (U) according to claim 10,
wherein the electrolyte filling unit (U) is configured for establishing a pre-determined pressure difference (P_{Δ}) across the dosing arrangement (5) during filling of electrolyte (E) from the pressure storage tank (4) via the dosing arrangement (5) and the filling arrangement (3) into the battery casing (1a) arranged in the pressure chamber (2), wherein the pressure difference (P_{Δ}) has a pressure difference value (V_{Δ}) determined as the difference between the tank pressure level (L_{TP}) in the pressure storage tank (4) and the pressure level (L_{P}) in the pressure chamber (2).

12. The electrolyte filling unit (U) according to claim 11,
wherein the pressure difference value (V_{Δ}) is lower than a pre-determined maximum pressure difference value (V_{ΔMAX}) during filling of electrolyte (E) from the pressure storage tank (4) via the dosing arrangement (5) and the filling arrangement (3) into the battery casing (1a), wherein the tank pressure level (L_{TP}) in the pressure storage tank (4) is controlled by the electrolyte filling unit (U) to be higher than the pressure level (L_{P}) in the pressure chamber (2) and lower than the sum of the pressure level (L_{P}) in the pressure chamber (2) and the maximum pressure difference value (V_{ΔMAX}).

13. The electrolyte filling unit (U) according to claim 12,
wherein the maximum pressure difference value (V_{ΔMAX}) is in the range of 0.05-0.3 MPa, preferably in the range of 0.1-0.2 MPa, and more preferably in the range of 0.1-0.15 MPa.

14. The electrolyte filling unit (U) according to any of claims 11 to 13,
wherein the pressure difference value (V_{Δ}) is a constant pressure difference value (V_{ΔC}) during filling of electrolyte (E) from the pressure storage tank (4) via the dosing arrangement (5) and the filling arrangement (3) into the battery casing (1a), wherein the tank pressure level (L_{TP}) in the pressure storage tank (4) is controlled by the electrolyte filling unit (U) to follow the pressure level (L_{P}) in the pressure chamber (2) by the constant pressure difference value (V_{ΔC}).

15. The electrolyte filling unit (U) according to claim 14,
wherein the constant pressure difference value (V_{ΔC}) is in the range of 0.05-0.3 MPa, preferably in the range of 0.05-0.2 MPa, and more preferably in the range of 0.05-0.15 MPa.
